# EUROPEAN PATENT SPECIFICATION

(11) **EP 2 490 498 B1**
(45) Date of publication and mention of the grant of the patent: **16.07.2014**
(21) Application number: 11290090.7
(22) Date of filing: 15.02.2011
(51) Int. Cl.: H04W 72/04, H04W 16/32, H04W 24/10, H04W 84/04

(54) **Apparatus, method and computer programs for determining and receiving measurement information**
Vorrichtung, Verfahren und Computerprogramme zum Bestimmen und Empfangen von Messdaten
Appareil, procédé et programmes informatiques pour déterminer et recevoir des informations de mesure

(43) Date of publication of application: 22.08.2012
(73) Proprietor: Alcatel Lucent, 75007 Paris (FR)
(72) Inventor: Worrall, Chandrika, Newbury Berkshire RG14 6SN (GB); Palat, Sudeep, Swindon Wiltshire SN5 6EE (GB); Lim, Seau Sian, Swindon, SN1 4GU (GB)
(74) Representative: Knecht, Ulrich Karl

(56) References cited:
- QUALCOMM INCORPORATED: "More on resource status report for eICIC", 3GPP DRAFT; R3-110163, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Dublin, Ireland; 20110117, 11 January 2011 (2011-01-11), XP050474877, [retrieved on 2011-01-11]
- ALCATEL-LUCENT: "Signalling support for Almost Blank Subframe patterns", 3GPP DRAFT; R2-106449, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050467151, [retrieved on 2010-11-09]
- INTEL CORPORATION: "Inter-frequency measurement restriction under eICIC", 3GPP DRAFT; R2-110172-EICIC-INTER-FREQ-MEAS-RESTRICTIO N, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dublin, Ireland; 20110117, 11 January 2011 (2011-01-11), XP050474636, [retrieved on 2011-01-11]

## Description

The present invention relates to wireless communications, more particularly but not exclusively to radio resource management and inter-frequency measurements in a mobile communication system.

### Background

Nowadays mobile communication networks heterogeneous architectures become more and more important. Heterogeneous networks (HetNets for abbreviation) are networks which utilize cell types of different sizes, as for example macrocells, picocells, and femtocells. Such cells are established by base station transceivers for which their coverage areas are determined by their transmission power and interference condition. Picocells and femtocells are cells having a smaller coverage area than macrocells. In some network scenarios the small cells' coverage area can be surrounded by the coverage area of a macrocell. The small cells can be deployed to extend the capacity of the network. With regard to standardization, within the 3^{rd} generation partnership project (3GPP for abbreviation), HetNets have been added to the scope of the Long Term Evolution-Advanced (LTE-A for abbreviation) work item. Since the cells or base stations in such networks may utilize the same frequency resources such architectures can suffer from interference created by the overlapping coverage areas of these cells. Therefore enhanced inter-cell interference coordination (ICIC for abbreviation) for co-channel HetNet deployment is one of the key techniques for LTE Release 10 (Rel-10 for abbreviation). Co-channel HetNets comprise macrocells and small cells operating on the same frequency channel. Such deployments present some specific interference scenarios for which ICIC techniques are utilized.

In one example scenario, the small cells are picocells, which are open to users of the macrocell network. In order to ensure that such picocells carry a useful share of the total traffic load, user equipment (UE for abbreviation) or mobile transceivers may be programmed or configured to associate preferentially with the picocells rather than the macrocells, for example by biasing the signal-to-interference-and-noise ratio (SINR for abbreviation) threshold at which they will select a picocell to associate with. Under such conditions, UEs near the edge of a picocell's coverage area may suffer strong interference from one or more macrocells. In order to alleviate such interference, some subframes may be configured as "blank" or "almost blank" in a macrocell. A blank subframe may contain no transmission from the macrocell, while an "almost blank" subframe typically contains no data transmission and little or no control signaling transmission, but may contain reference signal transmissions in order to ensure backward compatibility with legacy terminals which expect to find the reference signals for measurements but are unaware of the configuration of almost blank subframes. Almost blank subframes may also contain synchronization signals, broadcast control information and/or paging signals. The utilization of "blank" or "almost blank" subframes enables reduced or even suppressed interference for the picocell within these subframes. Hence, "blank" or "almost blank" sub-frames may be regarded as sub-frames during which at least some radio resources are suspended from transmission.

However, to make use of blank or almost blank subframes (ABSs for abbreviation) effectively (note that hereafter the term "ABS" is used, and should be understood to include both blank and almost blank subframes), signaling is needed from the macrocell to the picocell, e.g. across the corresponding backhaul interface, known in LTE as the "X2" interface. For LTE Release 10, it has been agreed that this X2 signaling will take the form of a coordination bitmap to indicate the ABS pattern (for example with each bit corresponding to one subframe in a series of subframes, with the value of the bit indicating whether the subframe is an ABS or not). Such signaling can help the picocell to schedule data transmissions in the picocell appropriately to avoid interference (e.g., by scheduling transmissions to UEs near the edge of the picocell during ABSs), and to signal to the UEs the subframes which should have low macrocellular interference and should therefore be used for measurements. Examples for such measurements are measurements for Radio Resource Management (RRM for abbreviation), which typically relate to handover, measurements for Radio Link Monitoring (RLM for abbreviation), which typically relate to detection of serving radio link failure, and measurements for Channel State Information (CSI for abbreviation), which typically relate to link adaptation on the serving radio link.

In such an example scenario, Radio Resource Control (RRC for abbreviation) signaling can be utilized to indicate to the UEs the set of subframes which they should use for measurements (e.g., for RLM/RRM or CSI), where RRC is a signaling protocol standardized by 3GPP for control and configuration signaling.

Another example scenario can arise with HetNets in which the small cells are femtocells, which operate on a Closed Subscriber Group (CSG for abbreviation) basis, and are therefore typically not open to users of the macrocellular network. In this case, the femtocells can cause strong interference to the macrocell UEs when these macrocell UEs come close to the femto base station transceivers, however, without having the possibility to associate with them. It may then be beneficial for the macrocells to indicate to their UEs the subframes in which they should make resource specific measurements, i.e. the subframes in which interference from one or more femtocells is reduced or absent. In the following to a base station transceiver may also be referred to as eNodeB (eNB as abbreviation) according to the 3GPP terminology.

Another aspect of HetNets arises considering overlay cells, which operate at a different frequency channel or band and have an overlapping geographical coverage area. Such overlapping or overlay networks may be HetNets as well. In addition to the intra-frequency neighbouring cell RRM measurements as described above, inter-frequency neighbouring cell RRM measurements may be carried out by a UE, for example to determine or enable inter-frequency handover (HO for abbreviation).

### Summary

Inter-frequency handover, i.e. handover to an overlay cell or an overlay network, may require performing measurements on another cell in another frequency channel or band. Embodiments may be based on a finding that in a heterogeneous network scenario, e.g. a macrocell with pico- or femtocells therein, a UE may need to measure the macrocell in another frequency either using the non-ABS or ABS (ABS pattern is repeated every 40ms) of that macrocell for inter-frequency handover. Embodiments may be further based on the finding that such an inter-frequency handover measurement may depend on whether it is carried out in an ABS or in a non-ABS sub-frame and the UE should therefore be informed about an ABS pattern of an overlay cell.

Embodiments may be based on a further finding that in order to measure an overlay macrocell signal quality on the non-ABS or ABS, the UE needs to be aligned to a system frame number (SFN for abbreviation) of the macrocell in the other frequency, as the ABS pattern is also aligned to the SFN. For intra-frequency handover and measurement, the ABS pattern is SFN aligned among the pico- and macro- intra-frequency-cells. This assumption may not apply to inter-frequency cells operating at different carrier frequencies.

In other words, the macrocell using the other frequency channel or band communicates using a repetitive radio frame pattern, also referred to as system frames, which are aligned with the ABS pattern. Embodiments may be further based on the finding that a UE measuring the inter-frequency macrocell is only radio frame aligned rather than SFN aligned to the inter-frequency cell of the overlay network, which can either lead to a delay, as the UE may need to wait to get SFN aligned to determine the correct ABS-pattern or, if there is not enough time to wait for the SFN alignment, lead to disadvantageous measurement results as the UE would not know whether the measurement is taken during an ABS or a non-ABS-frame.

Embodiments may be further based on a finding that, for example, in an LTE or LTE-A scenario, as the UE is radio frame aligned to the cell for measurement rather than SFN aligned, it is possible to look for common ABS or non-ABS sub-frames among every 10ms portion of the ABS pattern of the neighbouring inter-frequency cell, i.e. on a radio frame basis. The common ABS or non-ABS sub-frames can be signaled to the UE by the serving cell.

Embodiments may provide an apparatus being adapted for determining information on a common radio resource utilization for a mobile transceiver communicating with a base station transceiver using a first frequency channel, the common radio resource utilization referring to a second frequency channel. In other words, the common radio resource utilization can be of a second frequency channel. The common radio resource utilization may determine a common use of radio resources in a second frequency channel, where, for example, certain sub-frames may be commonly used in all radio frames of the second frequency channel for a certain purpose as e.g. ABS or non-ABS. The apparatus comprises means adapted for providing information on a radio resource utilization of an overlay base station transceiver, the overlay base station transceiver being operative for communicating with the mobile transceiver using the second frequency channel and for using a repetitive radio frame pattern comprising a plurality of radio frames, the information on the radio resource utilization comprising information on a radio resource utilization for each of the plurality of radio frames in the radio frame pattern. The apparatus further comprises means adapted for determining, based on a comparison of the information on the radio resource utilization for each of the plurality of radio frames in the radio frame pattern, the common radio resource utilization common among all of the plurality of radio frames in the radio frame pattern.

In embodiments each of the plurality of radio frames can be further subdivided in a plurality of sub-frames, where each sub-frame provides radio resources and wherein the information on the radio resource utilization indicates during which ones of the sub-frames at least some of the radio resources are suspended from transmission by the overlay base station transceiver.

In embodiments the radio frame pattern may have a duration of 40ms, a radio frame may have a duration of 10ms, and a sub-frame may have a duration of 1ms. The common radio resource utilization may indicate, commonly for all radio frames in the radio frame pattern, during which ones of the sub-frames at least some of the radio resources are suspended from transmission or during which ones of the sub-frames radio resources are not suspended for transmission by the overlay base station transceiver. The common radio resource utilization may comprise indications for a subset of sub-frames, the subset comprising fewer sub-frames than a radio frame in the radio frame pattern.

Embodiments may also provide a base station transceiver apparatus or a mobile transceiver apparatus comprising the above described apparatus and further comprising signaling means adapted for signaling information on the common radio resource utilization to the mobile transceiver as part of information on a measurement configuration. The base station transceiver may further comprise a receiving means adapted for receiving a measurement result from the mobile transceiver, the measurement result being based on the information on the common radio resource utilization.

In some embodiments the base station transceiver apparatus can be adapted for communicating in an LTE or LTE-A network, wherein the measurement configuration can correspond to an inter-frequency RRM measurement configuration and the information on the common radio resource utilization may correspond to an ABS pattern common to all frames of the radio frame pattern or the system frame utilized by the overlay base station transceiver, which can also be adapted for communicating in an LTE or LTE-A network.

Embodiments may further relate to an apparatus being adapted for receiving information on a measurement configuration from a base station transceiver using a first frequency channel for communicating with a mobile transceiver apparatus, the mobile transceiver apparatus being adapted for communicating with an overlay base station transceiver using a second frequency channel. The apparatus comprises means being adapted for determining information on a radio resource utilization of the overlay base station transceiver, the overlay base station transceiver using a repetitive radio frame pattern comprising a plurality of radio frames, the information on the measurement configuration comprising information on a common radio resource utilization common among all of the plurality of radio frames in the radio frame pattern, wherein the means adapted for determining is further adapted for determining the information on the radio resource utilization of the overlay base station transceiver based on the information on the common radio resource utilization.

In embodiments each of the plurality of radio frames in the radio frame pattern may be further subdivided in a plurality of sub-frames, where each sub-frame provides radio resources and wherein the information on the common radio resource utilization indicates during which ones of the sub-frames at least some of the radio resources are suspended from transmission by the overlay base station transceiver, or wherein the information on the common radio resource utilization indicates during which ones of the sub-frames radio resources are not suspended from transmission by the overlay base station transceiver. The information on the common radio resource utilization may comprise indications for a subset of sub-frames of a radio frame, the subset comprising fewer sub-frames than a radio frame in the radio frame pattern.

Again, in embodiments the radio frame pattern may have a duration of 40ms, a radio frame may have a duration of 10ms, and a sub-frame may have a duration of 1ms. The determining means can be adapted for determining the information on the radio resource utilization of the overlay base station transceiver based on a repetition of the common radio resource utilization of one radio frame in the radio frame pattern in all radio frames of the radio frame pattern.

Accordingly, embodiments may relate to a mobile transceiver apparatus comprising the above described apparatus being adapted for receiving information on a measurement configuration from a base station transceiver, further comprising measuring means adapted for measuring signals of the second frequency channel based on the information on the measurement configuration and the information on the common radio resource utilization of the overlay base station transceiver to obtain a measurement result. The mobile transceiver apparatus may further comprise a transmitting means adapted for transmitting the measurement result to the base station transceiver.

In embodiments the mobile transceiver apparatus can be adapted for communicating in an LTE or LTE-A network, wherein the measurement configuration may correspond to an inter-frequency RRM measurement configuration and the information on the common radio resource utilization may correspond to an ABS pattern common to all frames of the radio frame pattern or the system frame utilized by the overlay base station transceiver, which can also be adapted for communicating in an LTE or LTE-A network.

Furthermore, embodiments may provide the corresponding methods. An embodiment may provide a method for determining information on a common radio resource utilization for a mobile transceiver communicating with a base station transceiver using a first frequency channel, the common radio resource utilization referring to a second frequency channel of an overlay network. In other words, the common radio resource utilization can be of a second frequency channel. The common radio resource utilization may determine a common use of radio resources in a second frequency channel, where, for example, certain sub-frames may be commonly used in all radio frames of the second frequency channel for a certain purpose as e.g. ABS or non-ABS. The method may comprise a step of providing information on a radio resource utilization of an overlay base station transceiver, the overlay base station transceiver being operative for communicating with the mobile transceiver using the second frequency channel and for using a repetitive radio frame pattern comprising a plurality of radio frames, the information on the radio resource utilization comprising information on a radio resource utilization for each of the plurality of radio frames in the radio frame pattern. The method may further comprise a step of determining, based on a comparison of the information on the radio resource utilization for each of the plurality of radio frames in the radio frame pattern, the common radio resource utilization common among all of the plurality of radio frames in the radio frame pattern. The method may further comprise a step of signaling information on the common radio resource utilization to the mobile transceiver as part of the information on the measurement configuration.

Moreover, embodiments may provide a method for receiving information on a measurement configuration from a base station transceiver using a first frequency channel for communicating with a mobile transceiver apparatus, the mobile transceiver apparatus being adapted for communicating with an overlay base station transceiver of an overlay network using a second frequency channel. The method comprises a step of determining information on a radio resource utilization of the overlay base station transceiver, the overlay base station transceiver using a repetitive radio frame pattern comprising a plurality of radio frames, the information on the measurement configuration comprising information on a common radio resource utilization common among all of the plurality of radio frames in the radio frame pattern, and determining the information on the radio resource utilization of the overlay base station transceiver based on the information on the common radio resource utilization. The method may further comprise a step of measuring the signals of the overlay base station transceiver based on the information on the measurement configuration and the radio resource utilization of the overlay base station transceiver to obtain a measurement result.

In embodiments computer programs, having a program code for performing one of the above-described methods when the computer program is executed on a computer or processor, can be provided.

### Brief description of the Figures

Some other features or aspects will be described using the following non-limiting embodiments of apparatuses and/or methods and/or computer programs by way of example only, and with reference to the accompanying figures, in which
Figure 1a shows an embodiment of an apparatus being adapted for determining information on a common radio resource utilization;
Figure 1b shows an embodiment of an apparatus being adapted for receiving information on a measurement configuration;
Figure 2 shows a schematic representation of information on radio resource utilization and common radio resource utilization in embodiments;
Figure 3 shows another schematic representation of a signaling scheme in embodiments;
Figure 4a illustrates a flow chart of an embodiment of a method for determining information on a common radio resource; and
Figure 4b illustrates a flow chart of an embodiment of a method for receiving information on a measurement configuration.

### Description of some Embodiments

The illustrative description of the embodiments will be given in details combined with the appended figures. For the ease of understanding, some technical terms are explained first:
A picocell is a wireless communication system or base station typically covering a small area, such as in-building (offices, shopping malls, train stations, etc.), or more recently in-aircraft. A femtocell is a small cellular base station, typically designed for use in a home or small business. A macrocell is a cell in a mobile phone network that provides radio coverage served by a power cellular base station (tower). Generally, macrocells provide coverage larger than picocells and/or femtocells. The antennas for macrocells are mounted on ground-based masts, rooftops and other existing structures, at a height that may provide a clear view over the surrounding buildings and terrain. Macrocell base stations have power outputs of typically tens of watts.

Heterogeneous networks may also comprise wireless networks using different access technologies. For example, a wireless network which provides a service through a wireless local area network (WLAN for abbreviation) and is able to maintain the service when switching to a cellular network is called a wireless heterogeneous network.

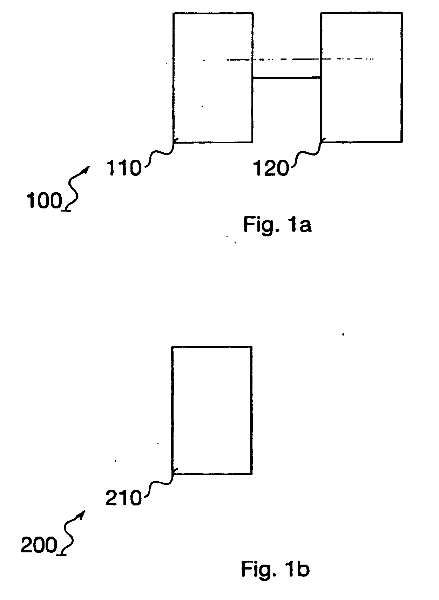

Figure 1a shows an embodiment of an apparatus 100 being adapted for determining information on a common radio resource utilization. The apparatus 100 is adapted for determining information on a common radio resource utilization for a mobile transceiver communicating with a base station transceiver using a first frequency channel. The common radio resource utilization refers to a second frequency channel or frequency band, which may also be denoted as second frequency layer. In some embodiments the first and second frequency channels may be different from each other, preferably even nonoverlapping. In other words, the common radio resource utilization can be of a second frequency channel. The common radio resource utilization may determine a common use of radio resources in a second frequency channel, where, for example, certain sub-frames may be commonly used in all radio frames of the second frequency channel for a certain purpose as e.g. ABS or non-ABS. The apparatus comprises means 110 adapted for providing information on a radio resource utilization of an overlay base station transceiver serving a cell of an overlay network, the overlay base station transceiver being operative for communicating with the mobile transceiver using the second frequency channel and for using a repetitive radio frame pattern comprising a plurality of radio frames. The information on the radio resource utilization comprises information on a radio resource utilization for each of the plurality of radio frames in the radio frame pattern of the overlay base station transceiver. The apparatus 100 further comprises means 120 adapted for determining, based on a comparison of the information on the radio resource utilization for each of the plurality of radio frames in the radio frame pattern, the common radio resource utilization common among all of the plurality of radio frames in the radio frame pattern.

Accordingly, Figure 1b shows an embodiment of an apparatus 200 being adapted for receiving information on a measurement configuration. The apparatus 200 is adapted for receiving information on a measurement configuration from a base station transceiver using a first frequency channel for communicating with a mobile transceiver apparatus, the mobile transceiver apparatus being adapted for communicating with an overlay base station transceiver using a second frequency channel. The apparatus 200 comprises means 210 adapted for determining information on a radio resource utilization of the overlay base station transceiver, the overlay base station transceiver using a repetitive radio frame pattern comprising a plurality of radio frames, the information on the measurement configuration comprising information on a common radio resource utilization common among all of the plurality of radio frames in the radio frame pattern, wherein the means 210 is adapted for determining is further adapted for determining the information on the radio resource utilization of the overlay base station transceiver based on the information on the common radio resource utilization.

In the following the apparatus 100 being adapted for determining information on a common radio resource utilization will be considered first. The apparatus 100 is to be understood as an apparatus which may be deployed in or coupled with a base station or a base station transceiver, in further embodiments it can also be coupled with a mobile transceiver or UE as will be detailed subsequently.

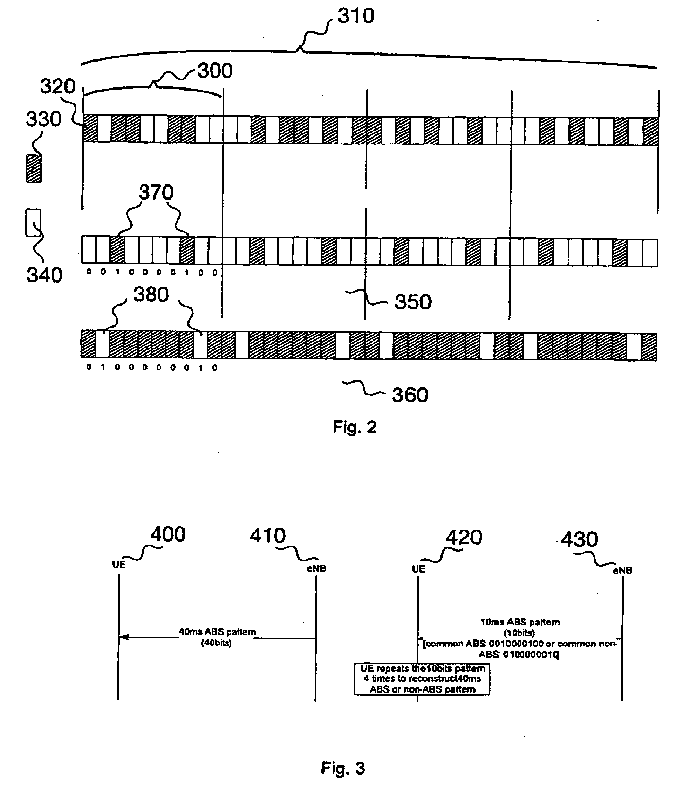

Figure 2 shows a schematic representation of information related to radio resource utilization as well as common radio resource utilization according to embodiments. Figure 2 shows one radio frame 300 of a repetitive radio frame pattern 310, which comprises a plurality of radio frames. In the embodiment illustrated in Figure 2 there are four subsequent (and different) radio frames in the radio frame pattern 310, which may all be represented or exemplified by radio frame 300 subsequently. In embodiments each of the plurality of radio frames can be further subdivided in a plurality of sub-frames, where each sub-frame provides radio resources and wherein the information on the radio resource utilization indicates during which ones of the sub-frames at least some of the radio resources are suspended from transmission by the overlay base station transceiver. Radio resources may e.g. be transmission time intervals, frequency sub-carriers, orthogonal coding schemes, etc. used for data, control signaling and/or reference signal transmissions. Figure 2 exemplarily illustrates one sub-frame 320 of the plurality of subframes within frame 300. For example, there are ten sub-frames in a radio frame in the embodiment of Figure 2. Assuming a sub-frame duration of 1ms, a radio frame may have a duration of 10ms, and the radio frame pattern 310 may have a duration of 40ms, according to embodiments.

For some embodiments, Figure 2 may be interpreted as to illustrate an ABS pattern starting with sub-frame 320 of the radio frame 300. Such an ABS pattern could for example be utilized by an overlay base station transceiver in an overlay HetNet scenario, as has been explained in the introductory portion of this specification. The ABS pattern is illustrated by a shading 330 of the sub-frames, where the shading 330 may indicate an ABS frame and a non-shaded sub-frame 340 may indicate a non-ABS frame. The ABS pattern of Figure 2 may have a duration of 40ms and may extend across the four radio frames of the radio frame pattern 310. It is to be noted that this ABS-pattern is for exemplary purposes only and not to be interpreted in a limiting way. In embodiments any kind of pattern may be utilized within the scope of the appended claims.

In embodiments, for example in an LTE or LTE-A scenario, the UE is radio frame aligned to an overlay cell for inter-frequency measurement, rather than SFN or radio frame pattern aligned. Embodiments may therefore look for ABS or non-ABS sub-frames common among all 10ms portions or radio frames of the ABS pattern 310. In other words, embodiments may evaluate the ABS pattern (i.e. the pattern resulting from a sequence of shaded and non-shaded sub-frames 330, 340) on a radio frame basis of a neighbouring inter-frequency or overlay cell.

This is illustrated in Figure 2 using the two sequences 350 and 360 at the center and the bottom. As can be seen by the shading 330 provided in sub-frame sequence 350, there is a repetitive pattern of ABS sub-frames common among all of the four radio frames of the radio frame pattern 300 depicted. Moreover, as illustrated by the non-shaded or non-ABS sub-frames 340 in the sequence 360 there is also a repetitive pattern of non-ABS sub-frames common among all of the four radio frames depicted. As exemplified by the sub-frame sequence 350, the third and the eighth sub-frames 370 of any radio frame in the radio frame pattern 310 are always ABS sub-frames. As exemplified by the sub-frame sequence 360, the second and the ninth sub-frames 380 of any radio frame in the radio frame pattern 310 are always non-ABS sub-frames. This is also indicated by the binary sequences underneath the first radio frame 300 of the sequences 350 and 360. For example, a "1" in the binary sequence underneath the sequence 350 indicates a common ABS sub-frame, i.e. an ABS sub-frame which, in terms of its position within the frames, is common to all of the frames of the radio frame pattern 310. Accordingly, a "1" in the binary sequence underneath the sequence 360 may indicate a common non-ABS sub-frame, i.e. a non-ABS sub-frame which, in terms of its position within the frames, is common to all of the frames of the radio frame pattern 310. Embodiments are, however, not limited to these binary indications, instead any indication may be used. In the present embodiment the binary sequences can be used to signal the common radio resource utilization to a UE for inter-frequency measurement purposes.

In embodiments, the common radio resource utilization may indicate, commonly for all radio frames in the radio frame pattern 310, during which ones of the sub-frames at least some of the radio resources are suspended from transmission or during which ones of the sub-frames 320 radio resources are not suspended for transmission by the overlay base station transceiver. Some embodiments may use a more compressed format for the indication, i.e. instead of the 10 bits also a shorter version may be used. For example, if it is known that the common radio resource utilization always indicates two common sub-frames, either ABS or none ABS, which may occur only in certain constellations, then less than 10bits may be utilized. In embodiments the common radio resource utilization may comprise indications for a subset of sub-frames, the subset comprising fewer sub-frames than a radio frame in the radio frame pattern, for example when the indicated sub-frames are located symmetrically in the radio frame.

The common ABS or non-ABS sub-frames can be signaled to the UE by the serving cell. Therefore, embodiments may comprise a base station transceiver apparatus comprising the apparatus 100 and further comprising signaling means adapted for signaling information on the common radio resource utilization to the mobile transceiver as part of information on a measurement configuration, particularly an inter-frequency measurement configuration for handover purposes. The base station transceiver may further comprise a receiving means adapted for receiving a measurement result from the mobile transceiver, the measurement result being based on the information on the common radio resource utilization.

In embodiments the base station transceiver apparatus can be further adapted for communicating in an LTE or LTE-A network, wherein the measurement configuration corresponds to an inter-frequency RRM measurement and the information on the common radio resource utilization corresponds to a common ABS pattern utilized by the overlay base station transceiver of an overlay HetNet, which can also be adapted for communicating in an LTE or LTE-A network.

In the following the apparatus 200 being adapted for receiving information on a measurement configuration will be considered further. As has been explained above, each of the plurality of radio frames in the radio frame pattern can be further subdivided in a plurality of sub-frames, where each sub-frame provides radio resources and wherein the information on the common radio resource utilization indicates during which ones of the sub-frames at least some of the radio resources are suspended (ABS sub-frame) from transmission by the overlay base station transceiver, and/or the information on the common radio resource utilization may indicate during which ones of the sub-frames radio resources are not suspended (non-ABS sub-frames) from transmission by the overlay base station transceiver. In line with the above, the information on the common radio resource utilization may comprise indications for a subset of sub-frames of a radio frame, the subset comprising fewer sub-frames than a radio frame in the radio frame pattern.

In embodiments, the determining means 210 can be adapted for determining the information on the radio resource utilization of the overlay base station transceiver based on a repetition of the common radio resource utilization of one radio frame in the radio frame pattern in all radio frames of the radio frame pattern. Referring to the binary sequences underneath the sequences 350 and 360 in Figure 2, it may easily be understood that the sequences 350 and 360 can be obtained by repeating the subsequences given for the first radio frame 300. A binary sequence for a single radio frame may therefore correspond to the information on the common radio resource utilization as it can be applied to any radio frame, or extended to the full length of the ABS or frame pattern 310, respectively.

Embodiments may also provide a mobile transceiver apparatus comprising the apparatus 200 as described above and further comprising measuring means adapted for measuring signals of the second frequency channel based on the information on the measurement configuration and the information on the common radio resource utilization of the overlay base station transceiver to obtain a measurement result. The mobile transceiver station may further comprise a transmitting means adapted for transmitting the measurement result to the base station transceiver. The mobile transceiver apparatus can be further adapted for communicating in an LTE or LTE-A network, wherein the measurement configuration may correspond to an inter-frequency RRM measurement configuration and the information on the common radio resource utilization may correspond to a common ABS pattern utilized by the overlay base station transceiver, which can also be adapted for communicating in an LTE or LTE-A network.

Moreover, embodiments may use an optimized signaling, optimized with respect to the existing signaling for intra-frequency measurement and with respect to signaling an entire ABS pattern.

Figure 3 shows another schematic representation of a signaling scheme according to embodiments.

For a better comparison, Figure 3 shows a message sequence chart for the signaling of the full ABS-pattern on the left hand side, where the signaling between a UE 400 and a base station transceiver, exemplified as eNB 410, is shown. In an embodiment depicted on the right hand side of Figure 3 a UE 420 may receive the common ABS pattern from an eNB 430. The common ABS pattern signaling needs only 10 bits while signaling the full pattern needs 40bits. According to the above description, the UE 420 may repeat the 10bit pattern to reconstruct the 40bit (or 40ms) ABS or non-ABS pattern. The UE can then reconstruct the new ABS pattern (or non-ABS pattern) based on the common ABS or non-ABS common among every 10ms portion 300 of the original ABS pattern 310 to measure the (overlay) cell in another frequency.

Note, that in some embodiments the full signaling of the ABS pattern 310 may be received in a UE or a mobile transceiver. Although, no signaling reduction may be achieved in such an embodiment, the mobile transceiver may comprise an apparatus 100 according to the above description and determine the common radio resource utilization from the information on the resource utilization, i.e. the full ABS pattern 310. Once the common radio resource utilization has been determined, e.g. in terms of common ABS and/or non-ABS sub-frames, the mobile transceiver may start the inter-frequency measurement on the desired ABS or non-ABS sub-frame on the frequency of the overlay transceiver base station. In such an embodiment the signaling comprises the full ABS pattern, but the mobile transceiver station would still not have to be SFN aligned.

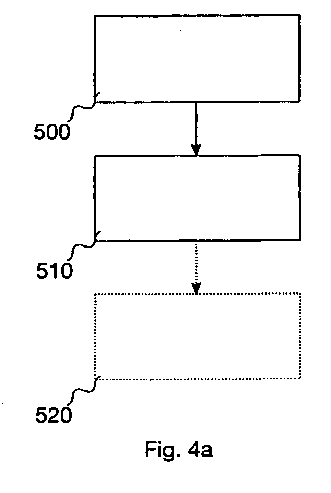

Figure 4a illustrates a flow chart of an embodiment of a method for determining information on a common radio resource. The method for determining information on a common radio resource utilization for a mobile transceiver communicating with a base station transceiver using a first frequency channel, the common radio resource utilization referring to a second frequency channel, comprises a step 500 of providing information on a radio resource utilization of an overlay base station transceiver, the overlay base station transceiver being operative for communicating with the mobile transceiver using the second frequency channel and for using a repetitive radio frame pattern comprising a plurality of radio frames, the information on the radio resource utilization comprises information on a radio resource utilization for each of the plurality of radio frames in the radio frame pattern. The method further comprises a step 510 of determining, based on a comparison of the information on the radio resource utilization for each of the plurality of radio frames in the radio frame pattern, the common radio resource utilization common among all of the plurality of radio frames in the radio frame pattern. The method may further comprise a step 520, the broken lines indicate the optional step 520 in Figure 4a, of signaling information on the common radio resource utilization to the mobile transceiver as part of the information on the measurement configuration.

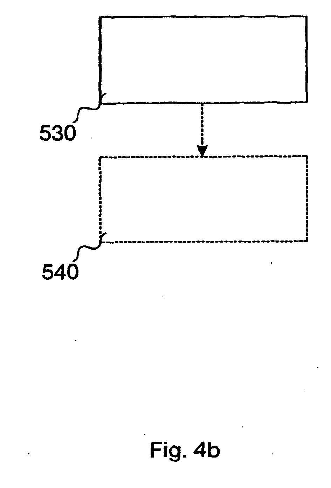

Figure 4b illustrates a flow chart of an embodiment of a method for receiving information on a measurement configuration. The method for receiving information on a measurement configuration from a base station transceiver using a first frequency channel for communicating with a mobile transceiver apparatus, the mobile transceiver apparatus being adapted for communicating with an overlay base station transceiver using a second frequency channel, comprises a step 530 of determining information on a radio resource utilization of the overlay base station transceiver, the overlay base station transceiver using a repetitive radio frame pattern comprising a plurality of radio frames, the information on the measurement configuration comprises information on a common radio resource utilization common among all of the plurality of radio frames in the radio frame pattern, and determining the information on the radio resource utilization of the overlay base station transceiver based on the information on the common radio resource utilization.

The method may comprise a further step 540, the broken lines indicating the optional step 540, of measuring the signals of the overlay base station transceiver based on the information on the measurement configuration and the radio resource utilization of the overlay base station transceiver to obtain a measurement result.

Moreover, embodiments may provide a computer program having a program code for performing one of the above described methods when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as "means adapted for providing", "means adapted for determining", "means adapted for signaling", "means adapted for receiving", "means adapted for measuring", or "means adapted for transmitting", may be provided through the use of dedicated hardware, as e.g. a processor, a controller, a transmitter or receiver, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (100) for a base station transceiver being adapted for determining information on a common radio resource utilization for a mobile transceiver communicating with a base station transceiver using a first frequency channel, the common radio resource utilization referring to a second frequency channel, the apparatus (100) comprising
means (110) adapted for receiving information on a radio resource utilization of an overlay base station transceiver, the overlay base station transceiver being operative for communicating with the mobile transceiver using the second frequency channel and for using a repetitive radio frame pattern comprising a plurality of radio frames, the information on the radio resource utilization comprising information on a radio resource utilization for each of the plurality of radio frames in the radio frame pattern; and
means (120) adapted for determining, based on a comparison of the information on the radio resource utilization for each of the plurality of radio frames in the radio frame pattern, the common radio resource utilization common among all of the plurality of radio frames in the radio frame pattern; and the apparatus (100) further comprising signaling means adapted for signaling information on the common radio resource utilization to the mobile transceiver as part of information on a measurement configuration, and further comprising a receiving means adapted for receiving a measurement result from the mobile transceiver, the measurement result being based on the information on the common radio resource utilization.

2. The apparatus (100) of claim 1, wherein each of the plurality of radio frames is further subdivided in a plurality of sub-frames, where each sub-frame provides radio resources and wherein the information on the radio resource utilization indicates during which ones of the sub-frames at least some of the radio resources are suspended from transmission by the overlay base station transceiver.

3. The apparatus (100) of claim 2, wherein the radio frame pattern has a duration of 40ms, a radio frame has a duration of 10ms, and a sub-frame has a duration of 1ms.

4. The apparatus (100) of claim 2, wherein the common radio resource utilization indicates, commonly for all radio frames in the radio frame pattern, during which ones of the sub-frames at least some of the radio resources are suspended from transmission or during which ones of the sub-frames radio resources are not suspended for transmission by the overlay base station transceiver and/or wherein the common radio resource utilization comprises indications for a subset of sub-frames, the subset comprising fewer sub-frames than a radio frame in the radio frame pattern.

5. The apparatus (100) of claim 4 being adapted for communicating in an LTE or LTE-A network, wherein the measurement configuration corresponds to an inter-frequency RRM measurement and the information on the common radio resource utilization corresponds to a common ABS pattern utilized by the overlay base station transceiver, which is also adapted for communicating in an LTE or LTE-A network.

6. An apparatus (200) for a mobile transceiver, the apparatus (200) being adapted for receiving information on a measurement configuration from a base station transceiver using a first frequency channel for communicating with the mobile transceiver apparatus, the mobile transceiver apparatus being adapted for communicating with an overlay base station transceiver using a second frequency channel, comprising
means (210) adapted for determining information on a radio resource utilization of the overlay base station transceiver, the overlay base station transceiver using a repetitive radio frame pattern comprising a plurality of radio frames, the information on the measurement configuration comprising information on a common radio resource utilization common among all of the plurality of radio frames in the radio frame pattern, wherein the determining means (210) is further adapted for determining the information on the radio resource utilization of the overlay base station transceiver based on the information on the common radio resource utilization;
the apparatus (200) further comprising
measuring means adapted for measuring signals of the second frequency channel based on the information on the measurement configuration and the information on the common radio resource utilization of the overlay base station transceiver to obtain a measurement result; and
transmitting means adapted for transmitting the measurement result to the base station transceiver.

7. The apparatus (200) of claim 6 coupled with an apparatus (100) being adapted for determining information on a common radio resource utilization for the mobile transceiver communicating with a base station transceiver using a first frequency channel, the common radio resource utilization referring to a second frequency channel, comprising means (110) adapted for receiving information on a radio resource utilization of an overlay base station transceiver, the overlay base station transceiver being operative for communicating with the mobile transceiver using the second frequency channel and for using a repetitive radio frame pattern comprising a plurality of radio frames, the information on the radio resource utilization comprising information on a radio resource utilization for each of the plurality of radio frames in the radio frame pattern; and means (120) adapted for determining, based on a comparison of the information on the radio resource utilization for each of the plurality of radio frames in the radio frame pattern, the common radio resource utilization common among all of the plurality of radio frames in the radio frame pattern.

8. The apparatus (200) of claim 6, wherein each of the plurality of radio frames in the radio frame pattern is further subdivided in a plurality of sub-frames, where each sub-frame provides radio resources and wherein the information on the common radio resource utilization indicates during which ones of the sub-frames at least some of the radio resources are suspended from transmission by the overlay base station transceiver, or wherein the information on the common radio resource utilization indicates during which ones of the sub-frames radio resources are not suspended from transmission by the overlay base station transceiver and/or wherein the information on the common radio resource utilization comprises indications for a subset of sub-frames of a radio frame, the subset comprising fewer sub-frames than a radio frame in the radio frame pattern.

9. The apparatus (200) of claim 6, wherein the radio frame pattern has a duration of 40ms, a radio frame has a duration of 10ms, and a sub-frame has a duration of 1ms.

10. The apparatus (200) of claim 6, wherein the determining means (210) is adapted for determining the information on the radio resource utilization of the overlay base station transceiver based on a repetition of the common radio resource utilization of one radio frame in the radio frame pattern in all radio frames of the radio frame pattern.

11. The apparatus (200) of claim 6 being adapted for communicating in an LTE or LTE-A network, wherein the measurement configuration corresponds to an inter-frequency RRM measurement and the information on the common radio resource utilization corresponds to a common ABS pattern utilized by the overlay base station transceiver, which is also adapted for communicating in an LTE or LTE-A network.

12. A method for determining, at a base station transceiver, information on a common radio resource utilization for a mobile transceiver communicating with the base station transceiver using a first frequency channel, the common radio resource utilization referring to a second frequency channel, comprising
receiving (500) information on a radio resource utilization of an overlay base station transceiver, the overlay base station transceiver being operative for communicating with the mobile transceiver using the second frequency channel and for using a repetitive radio frame pattern comprising a plurality of radio frames, the information on the radio resource utilization comprising information on a radio resource utilization for each of the plurality of radio frames in the radio frame pattern;
determining (510), based on a comparison of the information on the radio resource utilization for each of the plurality of radio frames in the radio frame pattern, the common radio resource utilization common among all of the plurality of radio frames in the radio frame pattern;
signaling information on the common radio resource utilization to the mobile transceiver as part of information on a measurement configuration; and
receiving a measurement result from the mobile transceiver, the measurement result being based on the information on the common radio resource utilization.

13. A method for receiving information on a measurement configuration from a base station transceiver using a first frequency channel for communicating at a mobile transceiver apparatus, the mobile transceiver apparatus being adapted for communicating with an overlay base station transceiver using a second frequency channel, comprising
determining (530) information on a radio resource utilization of the overlay base station transceiver, the overlay base station transceiver using a repetitive radio frame pattern comprising a plurality of radio frames, the information on the measurement configuration comprising information on a common radio resource utilization common among all of the plurality of radio frames in the radio frame pattern, and determining the information on the radio resource utilization of the overlay base station transceiver based on the information on the common radio resource utilization;
measuring signals of the second frequency channel based on the information on the measurement configuration and the information on the common radio resource utilization of the overlay base station transceiver to obtain a measurement result; and
transmitting the measurement result to the base station transceiver.

14. A computer program having a program code for performing the method of one of the claims 12 or 13 when the computer program is executed on a computer or processor.

## Patentansprüche

1. Vorrichtung (100) für einen Basisstations-Transceiver, welcher dazu ausgelegt ist, Informationen über eine gemeinsame Funkressourcennutzung für einen mobilen Transceiver, welcher unter Verwendung eines ersten Frequenzkanals mit einem Basisstations-Transceiver kommuniziert, zu ermitteln, wobei sich die gemeinsame Funkressourcennutzung auf einen zweiten Frequenzkanal bezieht, wobei die Vorrichtung (100) umfasst:
Mittel (100), welche dazu ausgelegt sind, Informationen über eine Funkressourcennutzung eines Überlagerungsbasisstations-Transceivers zu empfangen, wobei der Überlagerungsbasisstations-Transceiver betriebsfähig ist, um unter Verwendung des zweiten Frequenzkanals mit dem mobilen Transceiver zu kommunizieren und ein repetitives Funkrahmenmuster mit einer Vielzahl von Funkrahmen zu verwenden, wobei die Informationen über die Funkressourcennutzung Informationen über eine Funkressourcennutzung für einen jeden der Vielzahl von Funkrahmen in dem Funkrahmenmuster umfassen; und
Mittel (120), welche dazu ausgelegt sind, auf der Basis eines Vergleichs der Informationen über die Funkressourcennutzung für einen jeden der Vielzahl von Funkrahmen in dem Funkrahmenmuster die gemeinsame Funkressourcennutzung unter allen der Vielzahl von Funkrahmen in dem Funkrahmenmuster zu ermitteln; und
wobei die Vorrichtung (100) weiterhin Signalisierungsmittel umfasst, welche für das Signalisieren von Informationen über die gemeinsame Funkressourcennutzung an den mobilen Transceiver als Teil von Informationen über eine Messkonfiguration ausgelegt sind, und weiterhin ein Empfangsmittel umfasst, welches für den Empfang eines Messergebnisses von dem mobilen Transceiver ausgelegt ist, wobei das Messergebnis auf den Informationen über die gemeinsame Funkressourcennutzung basiert.

2. Vorrichtung (100) nach Anspruch 1, wobei ein jeder der Vielzahl von Funkrahmen weiterhin in eine Vielzahl von Teilrahmen unterteilt ist, wobei jeder Zeitrahmen Funkressourcen bereitstellt, und wobei die Informationen über die Funkressourcennutzung angeben, während welchen der Teilrahmen zumindest einige der Funkressourcen von der Übertragung durch einen Überlagerungsbasisstations-Transceiver suspendiert sind.

3. Vorrichtung (100) nach Anspruch 2, wobei die Dauer des Funkrahmenmusters 40 ms beträgt, die Dauer eines Funkrahmens 10 ms beträgt, und die Dauer eines Teilrahmens 1 ms beträgt.

4. Vorrichtung (100) nach Anspruch 2, wobei die gemeinsame Funkressourcennutzung für alle Funkrahmen in dem Funkrahmenmuster gemeinsam anzeigt, während welchen der Teilrahmen zumindest einige der Funkressourcen von der Übertragung suspendiert sind oder während welchen der Teilrahmen Funkressourcen nicht von der Übertragung durch den Überlagerungsbasisstations-Transceiver suspendiert sind, und/oder wobei die gemeinsame Funkressourcennutzung Angaben für einen Teilsatz von Teilrahmen umfasst, wobei der Teilsatz weniger Teilrahmen als ein Funkrahmen in dem Funkrahmenmuster umfasst.

5. Vorrichtung (100) nach Anspruch 4, ausgelegt für die Kommunikation in einem LTE-oder LTE-A-Netzwerk, wobei die Messkonfiguration einer RRM-Interfrequenzmessung entspricht und die Informationen über die gemeinsame Funkressourcennutzung einem von dem Überlagerungsbasisstations-Transceiver, welcher ebenfalls für die Kommunikation in einem LTE- oder LTE-A-Netzwerk ausgelegt ist, verwendeten gemeinsamen ABS-Muster entspricht.

6. Vorrichtung (200) für einen mobilen Transceiver, welche dazu ausgelegt ist, Informationen über eine Messkonfiguration von einem Basisstations-Transceiver, welcher einen ersten Frequenzkanal für die Kommunikation mit einem mobilen Transceiver verwendet, zu empfangen, wobei die mobile Transceiver-Vorrichtung für die Kommunikation mit einem Überlagerungsbasisstations-Transceiver unter Verwendung eines zweiten Frequenzkanals ausgelegt ist, umfassend
Mittel (210), welches dazu ausgelegt ist, Informationen über eine Funkressourcennutzung des Überlagerungsbasisstations-Transceivers zu ermitteln, wobei der Überlagerungsbasisstations-Transceiver ein repetitives Funkrahmenmuster mit einer Vielzahl von Funkrahmen verwendet, wobei die Informationen über die Messkonfiguration Informationen über eine gemeinsame Funkressourcennutzung unter allen der Vielzahl von Funkrahmen in dem Funkrahmenmuster umfassen, wobei das Mittel (210) zum Ermitteln weiterhin für das Vermitteln der Informationen über die Funkressourcennutzung des Überlagerungsbasisstations-Transceivers auf der Basis der Informationen über die gemeinsame Funkressourcennutzung ausgelegt ist;
wobei die Vorrichtung (200) weiterhin umfasst:
Mittel, welche dazu ausgelegt sind, Signale des zweiten Frequenzkanals auf der Basis der Informationen über die Messkonfiguration und der Informationen über die gemeinsame Funkressourcennutzung des Überlagerungsbasisstations-Transceivers zu messen, um ein Messergebnis zu erhalten; und
Übertragungsmittel, ausgelegt für die Übertragung des Messergebnisses an den Basisstations-Transceiver.

7. Vorrichtung (200) nach Anspruch 6, gekoppelt mit einer Vorrichtung (100), welche dazu ausgelegt ist, Informationen über eine gemeinsame Funkressourcennutzung für den mobilen Transceiver, welcher unter Verwendung eines ersten Frequenzkanals mit einem Basisstations-Transceiver kommuniziert, zu ermitteln, wobei sich die gemeinsame Funkressourcennutzung auf einen zweiten Frequenzkanal bezieht, umfassend Mittel (110), welche dazu ausgelegt sind, Informationen über eine Funkressourcennutzung eines Überlagerungsbasisstations-Transceivers zu empfangen, wobei der Überlagerungsbasisstations-Transceiver betriebsfähig ist, um unter Verwendung des zweiten Frequenzkanals mit dem mobilen Transceiver zu kommunizieren und ein repetitives Funkrahmenmuster mit einer Vielzahl von Funkrahmen zu verwenden, wobei die Informationen über die Funkressourcennutzung Informationen über eine Funkressourcennutzung für einen jeden der Vielzahl von Funkrahmen in dem Funkrahmenmuster umfassen; und Mittel (120), welche dazu ausgelegt sind, auf der Basis eines Vergleichs der Informationen über die Funkressourcennutzung für einen jeden der Vielzahl von Funkrahmen in dem Funkrahmenmuster die gemeinsame Funkressourcennutzung unter allen der Vielzahl von Funkrahmen in dem Funkrahmenmuster zu ermitteln.

8. Vorrichtung (200) nach Anspruch 6, wobei ein jeder der Vielzahl von Funkrahmen in dem Funkrahmenmuster weiterhin in eine Vielzahl von Teilrahmen unterteilt ist, wobei jeder Teilrahmen Funkressourcen bereitstellt, und wobei die Informationen über die gemeinsame Funkressourcennutzung angeben, während welchen der Teilrahmen zumindest einige der Funkressourcen von der Übertragung durch den Überlagerungsbasisstations-Transceiver suspendiert sind, oder wobei die Informationen über die gemeinsame Funkressourcennutzung angeben, während welchen der Teilrahmen Funkressourcen nicht von der Übertragung durch den Überlagerungsbasisstations-Transceiver suspendiert sind, und/oder wobei die Informationen über die gemeinsame Funkressourcennutzung Angaben für einen Teilsatz von Teilrahmen eines Funkrahmens umfassen, wobei der Teilsatz weniger Teilrahmen als ein Funkrahmen in dem Funkrahmenmuster umfasst.

9. Vorrichtung (200) nach Anspruch 6, wobei die Dauer des Funkrahmenmusters 40 ms beträgt, die Dauer eines Funkrahmens 10 ms beträgt, und die Dauer eines Teilrahmens 1 ms beträgt.

10. Vorrichtung (200) nach Anspruch 6, wobei das Mittel (210) zum Ermitteln für das Ermitteln der Informationen über die Funkressourcennutzung des Überlagerungsbasisstations-Transceivers auf der Basis einer Wiederholung der gemeinsamen Funkressourcennutzung eines Funkrahmens in dem Funkrahmenmuster in allen Funkrahmen des Funkrahmenmusters ausgelegt ist.

11. Vorrichtung (200) nach Anspruch 6, ausgelegt für die Kommunikation in einem LTE- oder LTE-A-Netzwerk, wobei die Messkonfiguration einer RRM-Interfrequenzmessung entspricht und die Informationen über die gemeinsame Funkressourcennutzung einem von dem Übertagerungsbasisstations-Transceiver, weicher ebenfalls für die Kommunikation in einem LTE- oder LTE-A-Netzwerk ausgelegt ist, verwendeten gemeinsamen ABS-Muster entspricht.

12. Verfahren zur Ermittlung, an einem Basisstations-Transceiver, von Informationen über eine gemeinsame Funkressourcennutzung für einen mobilen Transceiver, welcher unter Verwendung eines ersten Frequenzkanals mit einem Basisstations-Transceiver kommuniziert, wobei sich die gemeinsame Funkressourcennutzung auf einen zweiten Frequenzkanal bezieht, umfassend:
Empfangen (500) von Informationen über eine Funkressourcennutzung eines Überlagerungsbasisstations-Transceivers, wobei der Überlagerungsbasisstations-Transceiver betriebsfähig ist, um unter Verwendung des zweiten Frequenzkanals mit dem mobilen Transceiver zu kommunizieren und ein repetitives Funkrahmenmuster mit einer Vielzahl von Funkrahmen zu verwenden, wobei die Informationen über die Funkressourcennutzung Informationen über eine Funkressourcennutzung für einen jeden der Vielzahl von Funkrahmen in dem Funkrahmenmuster umfassen;
Ermitteln (510), auf der Basis eines Vergleichs der Informationen über die Funkressourcennutzung für einen jeden der Vielzahl von Funkrahmen in dem Funkrahmenmuster, der gemeinsamen Funkressourcennutzung unter allen der Vielzahl von Funkrahmen in dem Funkrahmenmuster;
Signalisieren von Informationen über die gemeinsame Funkressourcennutzung an den mobilen Transceiver als Teil von Informationen über eine Messkonfiguration; und
Empfangen eines Messergebnisses von dem mobilen Transceiver, wobei das Messergebnis auf den Informationen über die gemeinsame Funkressourcennutzung basiert.

13. Verfahren für den Empfang von Informationen über eine Messkonfiguration von einem Basisstations-Transceiver unter Verwendung eines ersten Frequenzkanals für die Kommunikation an einer mobilen Transceiver-Vorrichtung, wobei die mobile Transceiver-Vorrichtung für die Kommunikation mit einem Überlagerungsbasisstations-Transceiver unter Verwendung eines zweiten Frequenzkanals ausgelegt ist, umfassend:
Ermitteln (530) von Informationen über eine Funkressourcennutzung des Überlagerungsbasisstations-Transceivers, wobei der Überlagerungsbasisstations-Transceiver ein repetitives Funkrahmenmuster mit einer Vielzahl von Funkrahmen verwendet, wobei die Informationen über die Messkonfiguration Informationen über eine gemeinsame Funkressourcennutzung unter allen der Vielzahl von Funkrahmen in dem Funkrahmenmuster umfassen; und Ermitteln der Informationen über die Funkressourcennutzung des Überlagerungsbasisstations-Transceivers auf der Basis der Informationen über die gemeinsame Funkressourcennutzung;
Messen der Signale des zweiten Frequenzkanals auf der Basis der Informationen über die Messkonfiguration und der Informationen über die gemeinsame Funkressourcennutzung des Überlagungsbasisstations-Transceivers, um ein Messergebnis zu erhalten;
und
Übertragen des Messergebnisses an den Basisstations-Transceiver.

14. Computerprogramm mit einem Programmcode zur Durchführung des Verfahrens gemäß einem der Ansprüche 12 oder 13, wenn das Computerprogramm auf einem Computer oder Prozessor ausgeführt wird.

## Revendications

1. Appareil (100) pour un émetteur-récepteur de station de base adapté pour déterminer des informations sur une utilisation commune de ressources radio pour un émetteur-récepteur mobile communiquant avec un émetteur-récepteur de station de base à l'aide d'un premier canal de fréquence, l'utilisation commune de ressources radio faisant référence à un deuxième canal de fréquence, l'appareil (100) comprenant
des moyens (110) adaptés pour recevoir des informations sur une utilisation de ressources radio d'un émetteur-récepteur de station de base de recouvrement, l'émetteur-récepteur de station de base de recouvrement permettant de communiquer avec l'émetteur-récepteur mobile à l'aide du deuxième canal de fréquence et d'utiliser une structure répétitive de trames radio comprenant une pluralité de trames radio, les informations sur l'utilisation de ressources radio comprenant des informations sur une utilisation de ressources radio pour chacune parmi la pluralité de trames radio dans la structure de trames radio ; et
des moyens (120) adaptés pour déterminer, en fonction d'une comparaison des informations sur l'utilisation de ressources radio pour chacune parmi la pluralité de trames radio dans la structure de trames radio, l'utilisation commune de ressources radio commune à toutes les trames parmi la pluralité de trames radio dans la structure de trames radio ; et
l'appareil (100) comprenant en outre des moyens de signalisation adaptés pour signaler des informations sur l'utilisation commune de ressources radio à l'émetteur-récepteur mobile en tant que partie des informations sur une configuration de mesure, et comprenant en outre des moyens de réception adaptés pour recevoir un résultat de mesure provenant de l'émetteur-récepteur mobile, le résultat de mesure étant basé sur les informations sur l'utilisation commune de ressources radio.

2. Appareil (100) selon la revendication 1, dans lequel chacune parmi la pluralité de trames radio est en outre subdivisée en une pluralité de sous-trames, où chaque sous-trame fournit des ressources radio et dans lequel les informations sur l'utilisation de ressources radio indiquent durant quelles sous-trames la transmission d'au moins certaines des ressources radio est suspendue par l'émetteur-récepteur de station de base de recouvrement.

3. Appareil (100) selon la revendication 2, dans lequel la structure de trames radio a une durée de 40 ms, une trame radio a une durée de 10 ms et une sous-trame a une durée de 1 ms.

4. Appareil (100) selon la revendication 2, dans lequel l'utilisation commune de ressources radio indique, communément à toutes les trames radio dans la structure de trames radio, durant quelles sous-trames la transmission d'au moins certaines des ressources radio est suspendue ou durant quelles sous-trames la transmission des ressources radio n'est pas suspendue par l'émetteur-récepteur de station de base de recouvrement et/ou dans lequel l'utilisation commune de ressources radio comprend des indications pour un sous-ensemble de sous-trames, le sous-ensemble comprenant moins de sous-trames qu'une trame radio dans la structure de trames radio.

5. Appareil (100) selon la revendication 4 adapté pour communiquer dans un réseau LTE ou LTE-A, dans lequel la configuration de mesure correspond à une mesure RRM inter-fréquence et les informations sur l'utilisation commune de ressources radio correspondent à une structure ABS commune utilisée par l'émetteur-récepteur de station de base de recouvrement, qui est également adapté pour communiquer dans un réseau LTE ou LTE-A.

6. Appareil (200) pour un émetteur-récepteur mobile, l'appareil (200) étant adapté pour recevoir des informations sur une configuration de mesure provenant d'un émetteur-récepteur de station de base à l'aide d'un premier canal de fréquence pour communiquer avec l'appareil émetteur-récepteur mobile, l'appareil émetteur-récepteur mobile étant adapté pour communiquer avec un émetteur-récepteur de station de base de recouvrement à l'aide d'un deuxième canal de fréquence, comprenant
des moyens (210) adaptés pour déterminer des informations sur une utilisation de ressources radio de l'émetteur-récepteur de station de base de recouvrement, l'émetteur-récepteur de station de base de recouvrement utilisant une structure répétitive de trames radio comprenant une pluralité de trames radio, les informations sur la configuration de mesure comprenant des informations sur une utilisation commune de ressources radio commune à toutes les trames parmi la pluralité de trames radio dans la structure de trames radio, dans lequel les moyens de détermination (210) sont en outre adaptés pour déterminer les informations sur l'utilisation de ressources radio de l'émetteur-récepteur de station de base de recouvrement en fonction des informations sur l'utilisation commune de ressources radio ;
l'appareil (200) comprenant en outre
des moyens de mesure adaptés pour mesurer des signaux du deuxième canal de fréquence en fonction des informations sur la configuration de mesure et des informations sur l'utilisation commune de ressources radio de l'émetteur-récepteur de station de base de recouvrement pour obtenir un résultat de mesure ; et
des moyens de transmission adaptés pour transmettre le résultat de mesure à l'émetteur-récepteur de station de base.

7. Appareil (200) selon la revendication 6 couplé à un appareil (100) adapté pour déterminer des informations sur une utilisation commune de ressources radio pour l'émetteur-récepteur mobile communiquant avec un émetteur-récepteur de station de base à l'aide d'un premier canal de fréquence, l'utilisation commune de ressources radio faisant référence à un deuxième canal de fréquence, comprenant des moyens (110) adaptés pour recevoir des informations sur une utilisation de ressources radio d'un émetteur-récepteur de station de base de recouvrement, l'émetteur-récepteur de station de base de recouvrement permettant de communiquer avec l'émetteur-récepteur mobile à l'aide du deuxième canal de fréquence et d'utiliser une structure répétitive de trames radio comprenant une pluralité de trames radio, les informations sur l'utilisation de ressources radio comprenant des informations sur une utilisation de ressources radio pour chacune parmi la pluralité de trames radio dans la structure de trames radio ; et des moyens (120) adaptés pour déterminer, en fonction d'une comparaison des informations sur l'utilisation de ressources radio pour chacune parmi la pluralité de trames radio dans la structure de trames radio, l'utilisation de ressources radio communes commune à toutes les trames parmi la pluralité de trames radio dans la structure de trames radio.

8. Appareil (200) selon la revendication 6, dans lequel chacune parmi la pluralité de trames radio dans la structure de trames radio est en outre subdivisée en une pluralité de sous-trames, où chaque sous-trame fournit des ressources radio et dans lequel les informations sur l'utilisation commune de ressources radio indiquent durant quelles sous-trames la transmission d'au moins certaines des ressources radio est suspendue par l'émetteur-récepteur de station de base de recouvrement, ou dans lequel les informations sur l'utilisation commune de ressources radio indiquent durant quelles sous-trames la transmission des ressources radio n'est pas suspendue par l'émetteur-récepteur de station de base de recouvrement et/ou dans lequel les informations sur l'utilisation commune de ressources radio comprennent des indications pour un sous-ensemble de sous-trames d'une trame radio, le sous-ensemble comprenant moins de sous-trames qu'une trame radio dans la structure de trames radio.

9. Appareil (200) selon la revendication 6, dans lequel la structure de trames radio a une durée de 40 ms, une trame radio a une durée de 10 ms et une sous-trame a une durée de 1 ms.

10. Appareil (200) selon la revendication 6, dans lequel les moyens de détermination (210) sont adaptés pour déterminer les informations sur l'utilisation de ressources radio de l'émetteur-récepteur de station de base de recouvrement en fonction d'une répétition de l'utilisation commune de ressources radio d'une trame radio dans la structure de trames radio dans toutes les trames radio de la structure de trames radio.

11. Appareil (200) selon la revendication 6 adapté pour communiquer dans un réseau LTE ou LTE-A, dans lequel la configuration de mesure correspond à une mesure RRM inter-fréquence et les informations sur l'utilisation commune de ressources radio correspondent à une structure ABS commune utilisée par l'émetteur-récepteur de station de base de recouvrement, qui est également adapté pour communiquer dans un réseau LTE ou LTE-A.

12. Procédé pour déterminer, au niveau d'un émetteur-récepteur de station de base, des informations sur une utilisation commune de ressources radio pour un émetteur-récepteur mobile communiquant avec l'émetteur-récepteur de station de base à l'aide d'un premier canal de fréquence, l'utilisation commune de ressources radio faisant référence à un deuxième canal de fréquence, comprenant les étapes suivantes
recevoir (500) des informations sur une utilisation de ressources radio d'un émetteur-récepteur de station de base de recouvrement, l'émetteur-récepteur de station de base de recouvrement permettant de communiquer avec l'émetteur-récepteur mobile à l'aide du deuxième canal de fréquence et d'utiliser une structure répétitive de trames radio comprenant une pluralité de trames radio, les informations sur l'utilisation de ressources radio comprenant des informations sur une utilisation de ressources radio pour chacune parmi la pluralité de trames radio dans la structure de trames radio ; et
déterminer (510), en fonction d'une comparaison des informations sur l'utilisation de ressources radio pour chacune parmi la pluralité de trames radio dans la structure de trames radio, l'utilisation commune de ressources radio commune à toutes les trames parmi la pluralité de trames radio dans la structure de trames radio ;
signaler des informations sur l'utilisation commune de ressources radio à l'émetteur-récepteur mobile en tant que partie des informations sur une configuration de mesure ; et
recevoir un résultat de mesure provenant de l'émetteur-récepteur mobile, le résultat de mesure étant basé sur les informations sur l'utilisation commune de ressources radio.

13. Procédé pour recevoir des informations sur une configuration de mesure provenant d'un émetteur-récepteur de station de base à l'aide d'un premier canal de fréquence pour communiquer au niveau d'un appareil émetteur-récepteur mobile, l'appareil émetteur-récepteur mobile étant adapté pour communiquer avec un émetteur-récepteur de station de base de recouvrement à l'aide d'un deuxième canal de fréquence, comprenant les étapes suivantes
déterminer (530) des informations sur une utilisation de ressources radio de l'émetteur-récepteur de station de base de recouvrement, l'émetteur-récepteur de station de base de recouvrement utilisant une structure répétitive de trames radio comprenant une pluralité de trames radio, les informations sur la configuration de mesure comprenant des informations sur une utilisation commune de ressources radio commune à toutes les trames parmi la pluralité de trames radio dans la structure de trames radio, et déterminer les informations sur l'utilisation de ressources radio de l'émetteur-récepteur de station de base de recouvrement en fonction des informations sur l'utilisation commune de ressources radio ;
mesurer des signaux du deuxième canal de fréquence en fonction des informations sur la configuration de mesure et des informations sur l'utilisation commune de ressources radio de l'émetteur-récepteur de station de base de recouvrement pour obtenir un résultat de mesure ; et
transmettre le résultat de mesure à l'émetteur-récepteur de station de base.

14. Programme informatique possédant un code de programme pour exécuter le procédé selon l'une des revendications 12 et 13 lorsque le programme informatique est exécuté sur un ordinateur ou un processeur.
